# EUROPÄISCHE PATENTSCHRIFT

(11) **EP 2 644 879 B1**
(45) Veröffentlichungstag und Bekanntmachung des Hinweises auf die Patenterteilung: **12.04.2017**
(21) Anmeldenummer: 13155092.3
(22) Anmeldetag: 13.02.2013
(51) Int. Cl.: F02M 51/06, F02M 63/00

(54) **Verfahren zur Herstellung eines Magnetventils**
Method for producing a solenoid valve
Procédé de fabrication d'une électrovanne

(30) Priorität: 26.03.2012 DE 102012204753
(43) Veröffentlichungstag der Anmeldung: 02.10.2013
(73) Patentinhaber: ROBERT BOSCH GMBH, 70442 Stuttgart (DE)
(72) Erfinder: Graner, Juergen, 74372 Sersheim (DE); Maier, Martin, 71696 Moeglingen (DE); Berg, Anselm, 71640 Ludwigsburg (DE)

(56) Entgegenhaltungen:
- EP-A1- 2 325 473
- EP-A2- 1 854 909
- EP-A2- 2 052 789
- WO-A1-2004/033895
- WO-A2-2008/115773
- DE-A1-102006 017 449
- US-A- 5 732 888
- US-A1- 2010 154 734

## Beschreibung

### Stand der Technik

Die Erfindung geht aus von einem Verfahren zur Herstellung eines Magnetventils gemäß dem Oberbegriff des Anspruchs 1.

Bei elektromagnetisch betätigbaren Magnetaktoren zur Betätigung von Magnetventilen, insbesondere von Einspritzventilen, ist es bekannt, dass zur Erhöhung der Verschleißbeständigkeit gegen schlagenden und reibenden Verschleiß sowie zur Darstellung eines magnetischen Restluftspalts die Kontaktpartner (Magnetanker und Innenpol) mit einer Hartchromschicht beschichtet werden.

Aus der EP 2 325 473 A1 ist bereits ein Brennstoffeinspritzventil mit einem Elektromagneten als erregbaren Aktuator bekannt. Das Brennstoffeinspritzventil besitzt eine in axialer Richtung verschiebbar geführte Ventilnadel, einen Magnetkern, einen dem Magnetkern axial gegenüberliegend angeordneten Magnetanker, wobei der Magnetanker an der Ventilnadel angeordnet ist. Der Magnetanker weist ein erstes Grundmaterial und ein erstes Verstärkungselement auf, während der Magnetkern ein zweites Grundmaterial und ein zweites Verstärkungselement besitzt. Die Verstärkungselemente in Form von Beschichtungen weisen dabei Verschleißschutzeigenschaften auf, die notwendig sind, da diese im Betrieb eines Einspritzventils millionenfach über die Lebensdauer durch Anschlagen der beiden Bauteilpartner beansprucht sind. Für die Beschichtungen werden nichtmagnetische Materialien eingesetzt, wie z.B. Hartchrom oder Nickel. Diese werden, wie es bereits seit vielen Jahren bekannt ist, mittels galvanischer Abscheidung aufgebracht.

Hierbei ist es jedoch nachteilig, dass die Aufbringung einer Hartchromschicht typischerweise vergleichsweise zeitaufwändig und vergleichsweise teuer ist, so dass die Vermeidung einer solchen, insbesondere galvanisch aufgebrachten, Hartchromschicht von besonderem Vorteil ist.

Die Aufgabe der vorliegenden Erfindung besteht darin, eine kostengünstig realisierbare Oberflächenverstärkung von Magnetanker und Magnetkern bereitzustellen.

### Offenbarung der Erfindung

Das erfindungsgemäße Verfahren zur Herstellung eines Magnetventils hat gegenüber dem Stand der Technik den Vorteil, dass in einfacher Weise eine zielgerichtete Verstärkung von bestimmten Oberflächenbereichen von Magnetanker und Magnetkern in kostengünstiger Weise möglich ist. Insbesondere ist es erfindungsgemäß vorteilhaft möglich, dass ein zeitaufwändiges und teures Ver-fahren zum galvanischen Aufbringen einer Chromschicht vermieden werden kann.

Erfindungsgemäß ist es vorgesehen, dass ein Kaltgassprühverfahren bzw. ein Kaltgasspritzen zur Realisierung der Verstärkungselemente, d.h. des ersten Verstärkungselements bzw. des zweiten Verstärkungselements, verwendet wird. Das Kaltgassprühverfahren bzw. das Kaltgasspritzen ist ein Beschichtungsverfahren, bei dem der Beschichtungswerkstoff in Pulverform mit sehr hoher Geschwindigkeit auf das Trägermaterial (Substrat) aufgebracht wird. Dazu wird ein auf wenige hundert °C aufgeheiztes Prozessgas durch Expansion in einer Lavaldüse auf Überschallgeschwindigkeit beschleunigt und anschließend die Pulverpartikel in den Gasstrahl injiziert. Die injizierten Spritzpartikel werden dabei auf eine so hohe Geschwindigkeit beschleunigt, dass sie im Gegensatz zu anderen thermischen Spritzverfahren auch ohne vorangehendes An- oder Aufschmelzen beim Aufprall auf das Substrat eine dichte und fest haftende Schicht bilden. Die kinetische Energie zum Zeitpunkt des Aufpralls reicht für ein vollständiges Aufschmelzen der Partikel nicht aus.

Erfindungsgemäß ist es vorgesehen, dass im Wesentlichen lediglich solche Oberflächenbereiche des ersten Grundmaterials (des Magnetankers) und/oder des zweiten Grundmaterials (des Magnetkerns) mit dem ersten Verstärkungselements bzw. mit dem zweiten Verstärkungselement versehen werden, die einer erhöhten Belastung, insbesondere eine Belastung durch reibenden bzw. schlagenden Verschleiß ausgesetzt sind. Auf diese Weise ist es erfindungsgemäß in vorteilhafter Weise möglich, dass die Verstärkungselemente zielgerichtet und damit sparsam hinsichtlich des Materials der Verstärkungselemente aufbringbar sind.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Weiterbildung ist vorgesehen, dass als Material des Verstärkungselements ein Material mit einem Schmelzpunkt von größer als 500 °C, bevorzugt ein Material mit einem Schmelzpunkt von größer als 1000 °C, besonders bevorzugt ein Material mit einem Schmelzpunkt von größer als 1300 °C, verwendet wird. Hierdurch ist es erfindungsgemäß in vorteilhafter Weise möglich, dass (insbesondere gegenüber vergleichsweise niedrigschmelzenden Metallen wie etwa Zinn bzw. Zinnlegierungen, Kupfer bzw. Kupferlegierungen oder dergleichen) vergleichsweise hochbelastbare Materialien verwendet werden können, so dass die Verstärkungselemente (bei einer vorgegebenen Dimensionierung insbesondere hinsichtlich seiner Schichtdicke eine vergleichsweise große mechanische Stabilität verleiht.

Gemäß einer anderen bevorzugten Weiterbildung ist vorgesehen, dass das Material des ersten und/oder zweiten Verstärkungselements ein Chrommaterial oder eine Nickel-Chrom-Legierung, insbesondere eine INCONEL-Legierung, oder eine Edelstahl-Legierung ist. Hierdurch kann vorteilhafterweise eine große mechanische Stabilität mit einer guten Verarbeitbarkeit kombiniert werden.

Gemäß einer anderen bevorzugten Weiterbildung ist vorgesehen, dass das erste Verstärkungselement in einem im Wesentlichen senkrecht zur axialen Richtung der Ventilnadel angeordneten, dem Magnetkern abgewandten Oberflächenbereich des Magnetankers angeordnet ist und insbesondere lediglich im radial innenliegenden Teil dieses dem Magnetkern abgewandten Oberflächenbereichs des Magnetankers angeordnet ist. Hierdurch ist es erfindungsgemäß vorteilhaft möglich, dass ein Verschleißschutz mittels des ersten Verstärkungselements im Bereich zwischen dem Magnetanker und einer fest mit der Ventilnadel verbundenen Hülse bzw. zwischen dem Magnetanker und der Ventilnadel hergestellt wird.

Gemäß einer weiteren bevorzugten Weiterbildung ist vorgesehen, dass das erste Verstärkungselement in einem im Wesentlichen senkrecht zur axialen Richtung der Ventilnadel angeordneten, dem Magnetkern zugewandten Oberflächenbereich des Magnetankers angeordnet ist. Hierdurch ist es erfindungsgemäß vorteilhaft möglich, dass ein Verschleißschutz mittels des ersten Verstärkungselements im Bereich zwischen dem Magnetanker und einer fest mit der Ventilnadel verbundenen Hülse bzw. zwischen dem Magnetanker und der Ventilnadel hergestellt wird (insbesondere radial innenliegend) bzw. dass ein Verschleißschutz mittels des ersten Verstärkungselements im Bereich zwischen dem Magnetanker und dem Magnetkern (insbesondere radial außenliegend) hergestellt wird.

Ferner ist es gemäß einer bevorzugten Weiterbildung erfindungsgemäß vorgesehen, dass das zweite Verstärkungselement in einem im Wesentlichen senkrecht zur axialen Richtung der Ventilnadel angeordneten, dem Magnetanker zugewandten Oberflächenbereich des Magnetkerns angeordnet ist. Hierdurch ist es erfindungsgemäß vorteilhaft möglich, dass ein Verschleißschutz mittels des zweiten Verstärkungselements im Bereich zwischen dem Magnetanker und dem Magnetkern (insbesondere radial außenliegend) hergestellt wird.

Erfindungsgemäß ist es gemäß einer weiteren bevorzugten Weiterbildung ebenfalls vorgesehen, dass das zweite Verstärkungselement in einem im Wesentlichen parallel zur axialen Richtung der Ventilnadel angeordneten, zylinderförmigen Oberflächenbereich des Magnetkerns angeordnet ist. Hierdurch ist es erfindungsgemäß in vorteilhafter Weise möglich, dass ein Verschleißschutz mittels des zweiten Verstärkungselements im Bereich zwischen dem Magnetkern und der Ventilnadel bzw. einem mit der Ventilnadel fest verbundenen Element hergestellt wird.

Gemäß einer bevorzugten Weiterbildung ist vorgesehen, dass das erste Verstärkungselement und oder das zweite Verstärkungselement eine Materialdicke von 20 µm bis 200 µm, bevorzugt von 50 µm bis 100 µm aufweist. Ausführungsbeispiele der vorliegenden Erfindung sind in den Zeichnungen dargestellt und in der nachfolgenden Beschreibung näher erläutert.

Kurze Beschreibung der Zeichnungen

Es zeigen
**Figur 1** schematisch eine Schnittdarstellung eines Magnetventils
**Figur 2** schematisch einen Detailausschnitt der Schnittdarstellung gemäß Figur 1, und
**Figur 3** schematisch eine Darstellung des Aufbringens eines Materials zur Bildung eines Verstärkungselements auf einer Oberfläche eines Grundmaterials mit Hilfe eines Schmelzbadsprühverfahrens oder mittels eines Kaltgassprühverfahrens.

### Ausführungsform(en) der Erfindung

In den verschiedenen Figuren sind gleiche Teile stets mit den gleichen Bezugszeichen versehen und werden daher in der Regel auch jeweils nur einmal benannt bzw. erwähnt.

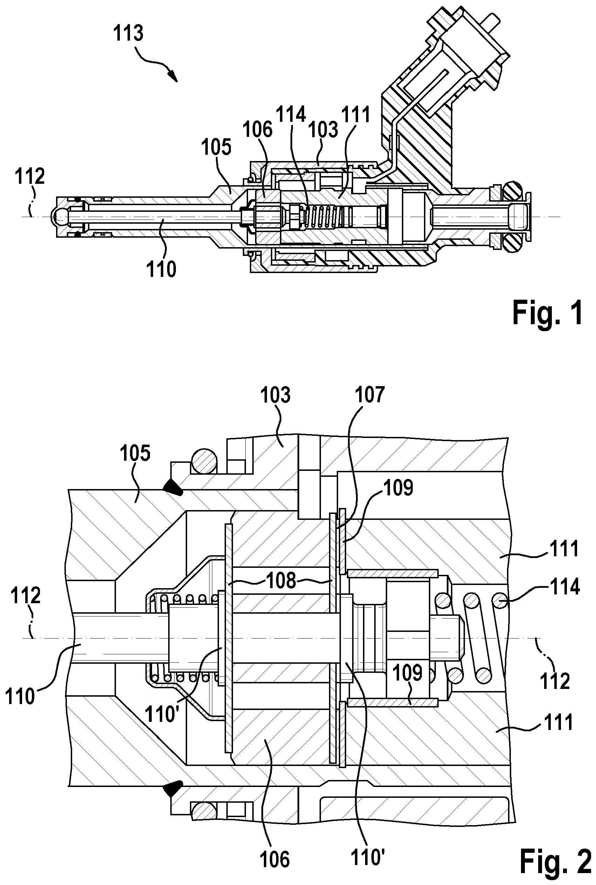

**Figur 1** zeigt schematisch eine Schnittdarstellung eines Magnetventils 113. **Figur 2** zeigt schematisch einen Detailausschnitt der Schnittdarstellung gemäß Figur 1. Das Magnetventil 113 ist insbesondere ein Einspritzventil für flüssigen Kraftstoff, wobei die Ventilnadel 110 und die Rückstellfeder 114 erkennbar sind. Das Magnetventil 113 ist im Wesentlichen rotationssymmetrisch bezüglich der Achse 112 aufgebaut. Ein weichmagnetischer, d.h. aus einem ferromagnetischen Material gefertigter, Anker 106 (im Folgenden auch Magnetanker 106 genannt) ist axial verschiebbar gelagert und wird bei eingeschalteter Spule 103 (im Folgenden auch Magnetspule 103 genannt) durch die resultierende Magnetkraft von einem weichmagnetischen Innenpol 111 (im Folgenden auch Magnetkern 111 genannt) angezogen. Für eine große Magnetkraft ist anzustreben, dass der magnetische Fluss möglichst vollständig den Ankerluftspalt 107 durchsetzt. Hierzu ist typischerweise eine Ventilhülse 105 (im Folgenden auch Hülse 105 genannt) im Bereich des Ankerluftspalts 107 mit einer Ringnut (im Folgenden auch als Nut bzw. als Dünnwandbereich bezeichnet) versehen. Dieser Dünnwandbereich bewirkt aufgrund der geringen Restwandstärke (der Hülse 105) eine Reduzierung des Querschnitts der Ventilhülse 105, so dass der magnetische Fluss fast vollständig im Ankerluftspalt 107 und nicht ungenutzt in der Hülse 105 verläuft.

Die Ventilhülse 105 hat die Aufgabe, den Innenraum gegen die Umgebung abzudichten. Der Kraftstoffdruck im inneren der Hülse 105 ist dabei in der Regel deutlich größer als der Umgebungsdruck, so dass die Hülse 105 druckbeaufschlagt ist und hohe Radialkräfte aufnehmen muss.

Zur Verstärkung des Materials (nachfolgend auch Grundmaterial genannt) des Magnetankers 106 und/oder des Magnetkerns 111 - insbesondere in solchen Bereichen (insbesondere Oberflächenbereichen) von Magnetanker 106 und/oder Magnetkern 111, die einem erhöhten Verschleiß gegen reibenden bzw. schlagenden Verschleiß ausgesetzt sind - ist es erfindungsgemäß vorgesehen, dass ein erstes Verstärkungselement 108 am Magnetanker 106 vorgesehen ist und/oder dass ein zweites Verstärkungselement 109 am Magnetkern 109 vorgesehen ist. Das erste Verstärkungselement 108 und/oder das zweite Verstärkungselement 109 wird erfindungsgemäß mittels eines Schmelzbadsprühverfahrens oder mittels eines Kaltgassprühverfahrens aufgebracht. Als Material des ersten Verstärkungselements 108 und/oder des zweiten Verstärkungselements 109 ist erfindungsgemäß insbesondere ein Material mit einem Schmelzpunkt von größer als 500 °C, bevorzugt ein Material mit einem Schmelzpunkt von größer als 1000 °C, besonders bevorzugt ein Material mit einem Schmelzpunkt von größer als 1300 °C, vorgesehen. Das erste Verstärkungselement 108 und/oder das zweite Verstärkungselement 109 weist insbesondere eine größere Verschleißbeständigkeit als das Grundmaterial von Magnetanker 106 und/oder Magnetkern 111 auf, so dass die Langlebigkeit der sich relativ zueinander bewegenden und auf ihre magnetischen Eigenschaften hin optimierten Elemente (d.h. der Magnetanker 106 und/oder der Magnetkern 111) in vorteilhafter Weise erhöht werden kann.

In Figur 2 ist erkennbar, dass die Ventilnadel 110 ein Element 110' aufweist, das insbesondere fest (d.h. insbesondere formschlüssig und/oder kraftschlüssig und/oder stoffschlüssig) und damit nicht relativbeweglich mit dem Grundmaterial der Ventilnadel 110 verbunden ist. Gegenüber diesem mit der Ventilnadel 110 verbundenen Element 110' ist der Magnetanker 106 relativverschieblich (bzw. relativbeweglich) parallel zur axialen Erstreckung der Ventilnadel 110 (d.h. parallel zur Achse 112), wobei die Relativbeweglichkeit des Magnetankers 106 durch zwei Bünde (mit dem Bezugszeichen 110' bezeichnet und nachfolgend auch Anschlagbünde genannt) des mit der Ventilnadel 110 verbundenen Elements 110' begrenzt ist. Der Magnetanker 106 stößt im Betrieb des Magnetventils 113 jedoch (aufgrund seiner Relativbewegung bezüglich der Ventilnadel 110 und damit auch bezüglich dem mit der Ventilnadel 110 verbundenen Element 110') an den Bünden an, wodurch in diesen Oberflächenbereichen des Magnetankers 106 ein Verschleißschutz in Form des ersten Verstärkungselements 108 vorgesehen ist. Da der der Einspritzdüse zugewandte Anschlagbund eine vergleichsweise geringe radiale Erstreckung aufweist, ist es vorteilhaft, das erste Verstärkungselement 108 in diesem Oberflächenbereich des Grundmaterials des Magnetankers 106 auch lediglich in einem inneren radialen Bereich (bzw. in einem radial innenliegenden Teil) vorzusehen (und nicht auf der gesamten senkrecht zur axialen Richtung 112 der Ventilnadel angeordneten (dem Magnetkern 111 abgewandten) Oberflächenbereich des Magnetankers 106). Auf der dem Magnetkern 111 zugewandten Seite des Magnetankers 106 ist es erfindungsgemäß dagegen vorteilhafterweise vorgesehen, dass das erste Verstärkungselement 108 sich über die gesamte radiale Erstreckung des Magnetankers 106 erstreckt, weil zusätzlich zum Anschlagbereich am dem Magnetkern 111 zugewandten Anschlagbund 110' als zusätzliche Stelle eines Verschleißschutzes der Bereich des Luftspalts 107 sinnvollerweise geschützt werden sollte.

Das zweite Verstärkungselement 109 ist erfindungsgemäß insbesondere am Magnetkern 111 derart vorgesehen, dass es den dem Magnetanker 106 gegenüberliegenden Oberflächenbereich des Magnetkerns 111 abdeckt (d.h. in diesem Bereich das Grundmaterial des Magnetkerns 111 abdeckt). Dieser Bereich ist ebenfalls im Wesentlichen senkrecht zur axialen Richtung der Ventilnadel 110 (d.h. senkrecht zur Achse 112) angeordnet. Weiterhin ist das zweite Verstärkungselement 109 erfindungsgemäß insbesondere auch in demjenigen Bereich des Magnetkerns 111 angeordnet, gegenüber dem sich die Ventilnadel 110 (bzw. ein mit der Ventilnadel sich mitbewegendes Element) bewegt. In diesem Bereich ist der Oberflächenbereich des Magnetkerns 111 zylinderförmig und parallel zur axialen Richtung der Ventilnadel 110 vorgesehen.

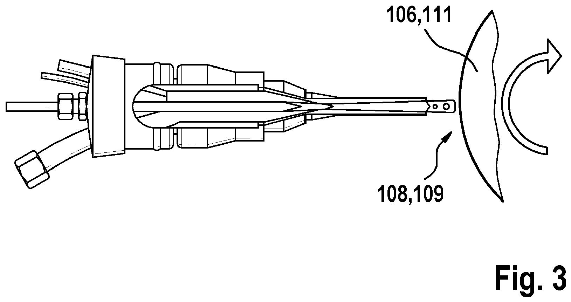

**Figur 3** zeigt schematisch eine Darstellung des Aufbringens eines Materials zur Bildung eines Verstärkungselements auf einer Oberfläche eines Grundmaterials mit Hilfe eines Schmelzbadsprühverfahrens oder mittels eines Kaltgassprühverfahrens. Beim Schmelzbadsprühverfahren wird das aufzubringende Material des ersten Verstärkungselements 108 und/oder des zweiten Verstärkungselements 109 erwärmt und auf die zu beschichtende Oberfläche, d.h. die Außenoberfläche des Grundmaterials von Magnetanker 106 und/oder Magnetkern 111, aufgebracht. Beim Kaltgassprühverfahren werden nicht aufgeschmolzene bzw. nicht erwärmte Partikel des aufzubringenden Materials stark beschleunigt und auf die zu beschichtende Oberfläche aufgebracht. In beiden Fällen kommt es zu einer mechanisch stabilen und insbesondere verschleißresistenteren Schicht des ersten Verstärkungselements 108 und/oder des zweiten Verstärkungselements 109.

Das Kaltgassprühverfahren ist auch unter dem Namen Flamecon der Firma Linde bekannt. Das Schmelzbadsprühverfahren ist auch unter der Bezeichnung MID (Molded Interconnect Devices) bekannt.

Erfindungsgemäß ist bei allen Ausführungsformen vorgesehen, das erste Verstärkungselement 108 und/oder das zweite Verstärkungselement 109 mittels eines Schmelzbadsprühverfahrens oder mittels eines Kaltgassprühverfahrens aufzubringen.

## Patentansprüche

1. Verfahren zur Herstellung eines Magnetventils (113), insbesondere eines Brennstoffeinspritzventils, mit einer in axialer Richtung verschiebbar geführten Ventilnadel (110), mit einem Magnetkern (111), mit einem dem Magnetkern (111) axial gegenüberliegend angeordneten Magnetanker (106), wobei der Magnetanker (106) an der Ventilnadel (110) angeordnet ist, wobei der Magnetanker (106) ein erstes Grundmaterial und ein erstes Verstärkungselement (108) und der Magnetkern (111) ein zweites Grundmaterial und ein zweites Verstärkungselement (109) aufweist, **dadurch gekennzeichnet, dass** das Verfahren einen Verfahrensschritt aufweist, wobei während des Verfahrensschritts das erste Verstärkungselement (108) auf das erste Grundmaterial und/oder das zweite Verstärkungselement (109) auf das zweite Grundmaterial mittels eines Schmelzbadsprühverfahrens oder mittels eines Kaltgassprühverfahrens aufgebracht wird, wobei dafür Oberflächenbereiche ausgewählt werden, die einer Belastung durch reibenden bzw. schlagenden Verschleiß ausgesetzt sind.

2. Verfahren zur Herstellung eines Magnetventils (113) nach Anspruch 1, **dadurch gekennzeichnet, dass** als Material des ersten und/oder zweiten Verstärkungselements (108, 109) ein Material mit einem Schmelzpunkt von größer als 500 °C, bevorzugt ein Material mit einem Schmelzpunkt von größer als 1000 °C, besonders bevorzugt ein Material mit einem Schmelzpunkt von größer als 1300 °C, verwendet wird.

3. Verfahren zur Herstellung eines Magnetventils (113) nach einem der vorhergehenden Ansprüche, **dadurch gekennzeichnet, dass** das Material des ersten und/oder zweiten Verstärkungselements (108, 109) ein Chrommaterial oder eine Nickel-Chrom-Legierung, insbesondere eine INCONEL-Legierung, oder eine Edelstahl-Legierung ist.

4. Verfahren zur Herstellung eines Magnetventils (113) nach einem der vorhergehenden Ansprüche, **dadurch gekennzeichnet, dass** das erste Verstärkungselement (108) in einem im Wesentlichen senkrecht zur axialen Richtung der Ventilnadel (110) angeordneten, dem Magnetkern (111) abgewandten Oberflächenbereich des Magnetankers (106) angeordnet ist und insbesondere lediglich im radial innenliegenden Teil dieses dem Magnetkern (111) abgewandten Oberflächenbereichs des Magnetankers (106) angeordnet ist.

5. Verfahren zur Herstellung eines Magnetventils (113) nach einem der vorhergehenden Ansprüche, **dadurch gekennzeichnet, dass** das erste Verstärkungselement (108) in einem im Wesentlichen senkrecht zur axialen Richtung der Ventilnadel (110) angeordneten, dem Magnetkern (111) zugewandten Oberflächenbereich des Magnetankers (106) angeordnet ist.

6. Verfahren zur Herstellung eines Magnetventils (113) nach einem der vorhergehenden Ansprüche, **dadurch gekennzeichnet, dass** das zweite Verstärkungselement (109) in einem im Wesentlichen senkrecht zur axialen Richtung der Ventilnadel (110) angeordneten, dem Magnetanker (106) zugewandten Oberflächenbereich des Magnetkerns (111) angeordnet ist.

7. Verfahren zur Herstellung eines Magnetventils (113) nach einem der vorhergehenden Ansprüche, **dadurch gekennzeichnet, dass** das zweite Verstärkungselement (109) in einem im Wesentlichen parallel zur axialen Richtung der Ventilnadel (110) angeordneten, zylinderförmigen Oberflächenbereich des Magnetkerns (111) angeordnet ist.

8. Verfahren zur Herstellung eines Magnetventils (113) nach einem der vorhergehenden Ansprüche, **dadurch gekennzeichnet, dass** das erste Verstärkungselement (108) und/oder das zweite Verstärkungselement (109) mit einer Materialdicke von 20 µm bis 200 µm, bevorzugt von 50µm bis 100µm, aufgebracht werden.

## Claims

1. Method for producing a solenoid valve (113), in particular a fuel injection valve, having a valve needle (110) which is guided so as to be able to be displaced in the axial direction, having a core (111), having an armature (106) axially opposite the core (111), wherein the armature (106) is arranged on the valve needle (110), wherein the armature (106) has a first base material and a first reinforcing element (108) and the core (111) has a second base material and a second reinforcing element (109), **characterized in that** the method involves a method step in which, during the method step, the first reinforcing element (108) is applied to the first base material and/or the second reinforcing element (109) is applied to the second base material by melt bath spraying or by cold gas spraying, the surface regions selected for this being regions which are subjected to load by friction-type or impact-type wear.

2. Method for producing a solenoid valve (113) according to Claim 1, **characterized in that** the material used for the first and/or second reinforcing element (108, 109) is a material having a melting point above 500°C, preferably a material having a melting point above 1000°C, particularly preferably a material having a melting point above 1300°C.

3. Method for producing a solenoid valve (113) according to one of the preceding claims, **characterized in that** the material of the first and/or second reinforcing element (108, 109) is a chromium material or a nickel-chromium alloy, in particular an inconel alloy, or a stainless steel alloy.

4. Method for producing a solenoid valve (113) according to one of the preceding claims, **characterized in that** the first reinforcing element (108) is arranged in a surface region of the armature (106) arranged essentially perpendicular to the axial direction of the valve needle (110) and oriented away from the core (111), and in particular is arranged only in the radially inner part of this surface region of the armature (106) oriented away from the core (111).

5. Method for producing a solenoid valve (113) according to one of the preceding claims, **characterized in that** the first reinforcing element (108) is arranged in a surface region of the armature (106) arranged essentially perpendicular to the axial direction of the valve needle (110) and oriented toward the core (111).

6. Method for producing a solenoid valve (113) according to one of the preceding claims, **characterized in that** the second reinforcing element (109) is arranged in a surface region of the core (111) arranged essentially perpendicular to the axial direction of the valve needle (110) and oriented toward the armature (106).

7. Method for producing a solenoid valve (113) according to one of the preceding claims, **characterized in that** the second reinforcing element (109) is arranged in a cylindrical surface region of the core (111) arranged essentially parallel to the axial direction of the valve needle (110).

8. Method for producing a solenoid valve (113) according to one of the preceding claims, **characterized in that** the first reinforcing element (108) and/or the second reinforcing element (109) are applied with a material thickness of 20 µm to 200 µm, preferably 50 µm to 100 µm.

## Revendications

1. Procédé de fabrication d'une électrovanne (113), en particulier d'une soupape d'injection de carburant, avec un pointeau de soupape (110) guidé de façon coulissante en direction axiale, avec un noyau magnétique (111), avec un induit magnétique (106) disposé axialement en face du noyau magnétique (111), dans lequel l'induit magnétique (106) est disposé sur le pointeau de soupape (110), dans lequel l'induit magnétique (106) présente un premier matériau de base et un premier élément de renforcement (108) et le noyau magnétique (111) présente un deuxième matériau de base et un deuxième élément de renforcement (109), **caractérisé en ce que** le procédé présente une étape de procédé, dans lequel, pendant l'étape de procédé, on applique le premier élément de renforcement (108) sur le premier matériau de base et/ou le deuxième élément de renforcement (109) sur le deuxième matériau de base au moyen d'un procédé de projection de bain fondu ou au moyen d'un procédé de projection de gaz froid, dans lequel on choisit à cet effet des régions de la surface qui sont exposées à une charge d'usure par frottement ou par chocs.

2. Procédé de fabrication d'une électrovanne (113) selon la revendication 1, **caractérisé en ce que** l'on utilise comme matériau du premier et/ou du deuxième élément de renforcement (108, 109) un matériau présentant un point de fusion supérieur à 500°C, de préférence un matériau présentant un point de fusion supérieur à 1000°C, et de préférence encore un matériau présentant un point de fusion supérieur à 1300°C.

3. Procédé de fabrication d'une électrovanne (113) selon l'une quelconque des revendications précédentes, **caractérisé en ce que** le matériau du premier et/ou du deuxième élément de renforcement (108, 109) est un matériau au chrome ou un alliage nickel-chrome, en particulier un alliage INCONEL, ou un alliage d'acier allié.

4. Procédé de fabrication d'une électrovanne (113) selon l'une quelconque des revendications précédentes, **caractérisé en ce que** le premier élément de renforcement (108) est disposé dans une région de la surface de l'induit magnétique (106) essentiellement perpendiculaire à la direction axiale du pointeau de soupape (110) et située à l'opposé du noyau magnétique (111) et est disposé en particulier uniquement dans la région radialement intérieure de cette région de la surface de l'induit magnétique (106) située à l'opposé du noyau magnétique (111).

5. Procédé de fabrication d'une électrovanne (113) selon l'une quelconque des revendications précédentes, **caractérisé en ce que** le premier élément de renforcement (108) est disposé dans une région de la surface de l'induit magnétique (106) essentiellement perpendiculaire à la direction axiale du pointeau de soupape (110) et tournée vers le noyau magnétique (111).

6. Procédé de fabrication d'une électrovanne (113) selon l'une quelconque des revendications précédentes, **caractérisé en ce que** le deuxième élément de renforcement (109) est disposé dans une région de la surface du noyau magnétique (111) essentiellement perpendiculaire à la direction axiale du pointeau de soupape (110) et tournée vers l'induit magnétique (106) .

7. Procédé de fabrication d'une électrovanne (113) selon l'une quelconque des revendications précédentes, **caractérisé en ce que** le deuxième élément de renforcement (109) est disposé dans une région de la surface du noyau magnétique (111) de forme cylindrique et disposée essentiellement parallèlement à la direction axiale du pointeau de soupape (110).

8. Procédé de fabrication d'une électrovanne (113) selon l'une quelconque des revendications précédentes, **caractérisé en ce que** l'on applique le premier élément de renforcement (108) et/ou le deuxième élément de renforcement (109) avec une épaisseur de matériau de 20 µm à 200 µm, de préférence de 50 µm à 100 µm.
